# EUROPEAN PATENT APPLICATION

(11) **EP 2 666 820 A1**
(43) Date of publication of application: **27.11.2013**
(21) Application number: 12169587.8
(22) Date of filing: 25.05.2012
(51) Int. Cl.: C08L 63/00, C08L 63/04, C08K 3/22, C09D 163/00, C09D 163/04, C08L 23/08, C08L 27/12

(54) **Epoxy resin fluoropolymer primer composition**

(71) Applicant: Solvay Specialty Polymers Italy S.p.A., 20021 Bollate (MI) (IT)
(72) Inventor: Polastri, Fabio, 20900 Monza (MB) (IT)
(74) Representative: Benvenuti, Federica

(57) **Abstract**

The invention relates to a composition [composition (C)] suitable for use as a primer coating, which comprises: at least one ethylene/chlorotrifluoroethylene (ECTFE) polymer comprising recurring units derived from ethylene (E) and from chlorotrifluoroethylene (CTFE); at least one epoxy resin; at least one oxide of cobalt, and, optionally, at least one oxide of zinc, wherein the composition (C) comprises more than 60% by weight of the at least one epoxy resin, with respect to the total weight of the composition (C). The primer coating composition made from the composition (C) is found to be particularly advantageous for the application as a primer on a galvanized steel surface, and can effectively bind its overlying topcoat with the galvanized steel surface.

## Description

### Technical Field

This invention relates to fluoropolymer primer composition useful for coating substrates, including galvanized steel substrates, based on polymers of ethylene and a fluoromonomer selected from the group consisting of chlorotrifluoroethylene, tetrafluoroethylene and mixtures thereof.

### Background Art

Copolymers of ethylene and chlorotrifluoroethylene/chlorotrifluoroethylene are known in the art and suggested as being useful for coating articles by coating techniques, and in particular by powder coating techniques.

However it has been found that the adhesion between such copolymer coatings and the underlying substrate, particularly in the case of metal substrates, is not suitable for certain applications, especially those wherein a severe environment is encountered.

Primer compositions have thus been developed aiming at providing improved adherence to such substrates.

Thus, US4098756 (ALLIED CHEMICAL CORPORATION) 04.07.1978 discloses a primer composition comprising:
- a terpolymer of ethylene, either of chlorotrifluoroethylene and tetrafluoroethylene and 3,3,3-trifluoro-2-trifluoromethylpropene;
- from about 5 to 60 percent by weight of an epoxy resin; and
- from 1 to 25 percent by weight of an oxide of cobalt, nickel, manganese, tungsten or mixtures thereof.

Further, US5177126 (AUSIMONT SPA) 05.01.1993 discloses a primer comprising an ethylene/chlorotrifluoroethylene polymer, from 15 to 50 % wt of an epoxy resin, and from 0.5 to 5.0 % wt of titanium dioxide.

Although the aforementioned primer compositions are useful when applied on some metal substrates such as those of carbon steel and brass, it has been found that such polymer compositions do not provide a satisfactory adhesion when applied onto galvanized surfaces, namely metal, metal alloys or steel surfaces which are coated with a layer of Zinc. As such, there is a need to develop a new primer composition that can be easily adhered onto a variety of metal substrates, including those coated with galvanized surfaces, while providing a strong bonding strength.

### Summary of invention

The invention pertains to a composition [composition (C)] comprising:
- at least one ethylene/chlorotrifluoroethylene (ECTFE) polymer comprising recurring units derived from ethylene (E) and from chlorotrifluoroethylene (CTFE);
- at least one epoxy resin;
- at least one oxide of cobalt; and, optionally,
- at least one oxide of zinc,
   wherein the composition (C) comprises more than 60% by weight of the at least one epoxy resin, with respect to the total weight of the composition (C).

The Applicant has surprisingly found that the composition (C) as above detailed can be advantageously used as a primer coating composition for various substrates, and demonstrates improved adhesion and bond strength to metal substrates including those made with galvanized surfaces.

The composition (C) is particularly useful for preparing a primer coating for substrates such as galvanized metal, and may be used in conjunction with an overlying topcoat of holopolymer(s). Examples of the holopolymers in the topcoat are ethylene/chlorotrifluoroethylene (ECTFE) copolymers and ethylene/tetrafluoroethylene (ETFE) copolymers, of which ECTFE copolymers are preferred. The Applicant has found that the use of a relatively high amount of epoxy resin component in the composition (C) advantageously provides a primer which forms an effective binding layer between the topcoat and the metal substrate, especially those made with galvanized surface.

In one embodiment of the present invention, the composition (C) comprises from 15% to 40% by weight, preferably from 20% to 35% by weight, more preferably from 25% to 30% by weight of the at least one ECTFE polymer, with respect to the total weight of the composition (C).

The ECTFE polymer of composition (C) typically comprises:
(a) from 30 to 70%, preferably from 40 to 60% by moles of ethylene (E); and
(b) from 70 to 30%, preferably from 60 to 40%, by moles of chlorotrifluoroethylene (CTFE).

Optionally, the ECTFE polymer can also contain nominal amounts, of up to 10 % by moles based on the aforementioned monomers (a) and (b), of copolymerizable comonomer other than ethylene and chlorotrifluoroethylene, including propylene, isobutylene, vinyl fluoride, propylene, hexafluoride, tetrafluoroethylene, vinylidene fluoride, perfluoro-vinyl ether, acrylic acid and alkyl ester, methacrylic acid and alkyl ester, perfluoro alkyl ethylene, etc.

End chains, defects or minor amounts of monomer impurities leading to recurring units different from those above mentioned can be still comprised in the ECTFE polymer of the composition (C), without adversely affecting the desired coating attributes thereof.

In a particular embodiment of the present invention, the composition (C) comprises the ECTFE polymer as the sole polymer component.

The melt index of the ECTFE polymer is advantageously at least 0.1, preferably at least 0.5, more preferably at least 1.0 g/10 min. Further, the melt index of the ECTFE polymer is advantageously at most 50, preferably at most 30, more preferably at most 25 g/10 min.

The melt index of ECTFE polymer is measured in accordance with modified ASTM test No. 1238, run at 275°C, under a piston load of 2.16 kg.

The ECTFE polymer of the present invention has a melting point advantageously of at least 200°C and at most 265°C.

Particularly adapted to the composition (C) for primer coating use is ECTFE powder under the tradename HALAR^{®}, manufactured by Solvay Speciality Polymers.

The ECTFE polymer may be prepared by any process known to those skilled in the art, as described, for example, in US 2392378 (HANFORD) 25.10.1943 , which shows copolymerization of ethylene with chlorotrifluoroethylene in a stirred aqueous medium at superatromospheric pressure using benzoyl peroxide as catalyst; or in US 3371076 (M. RAGAZZINI; D. CARCANO) 09.03.1962 and US 3501446 (M.RAGAZZINI;
D. CARCANO) 27.07.1966 , relating to methods for making ethylene/chlorotrifluoroethylene copolymers using oxygen-activated boron-containing catalysts and to products obtained by that process. About equimolar ethylene/chlorotrifluoroethylene copolymers having a melting point above 200°C can also be prepared by batchwise bulk copolymerization of the monomer at temperatures of about 0°C, say between about -20 to +20°C, at superatmospheric pressure in an agitator-equipped pressure vessel by charging the vessel with liquid chlorotrifluoroethylene monomer and bubbling gaseous ethylene into this monomer, using organic peroxide-type initiators, such as trichloroacetyl peroxide and, if desired, adding small amounts of chain transfer agents, such as chloroform or heptane. The desired copolymer product is obtained as dispersion in the monomer.

The composition (C) of the present invention generally comprises more than 60% by weight, preferably 65% to 85%, more preferably 65% to 75% of at least one epoxy resin, with respect to the total weight of the composition (C).

Epoxy resins which may be employed in the composition (C) of the present invention include, but not limited to, epoxy resins which may be prepared by the condensation of epoxy compounds, such as epichlorohydrin and glycerol dichlorohydrin, with polyhydric-organic compounds such as alcohols; e.g., pentaerythritol; dihydric alcohols, e.g., glycerol; dihydric phenols, e.g., bisphenol A; and trihydric phenols. For example, bisphenol A based epoxy resins, such as epoxy resins prepared by the condensation of bisphenol A and epichlorohydrin, or the diglycidyl ether of bisphenol A, may be employed. Other epoxy resins include epoxidized novolac resins such as epoxy cresol novolacs and epoxy phenol novolacs. Other epoxy resins which may be employed include cycloaliphatic resins in which the epoxide groups are attached directly to the cycloaliphatic portions of the molecule rather than on the alkyl chain.

Preferred epoxy resins which may be employed in the composition (C) include bisphenol A based epoxy resins and epoxy cresol novolac resins. A preferred bisphenol A based epoxy resin has the following structure: 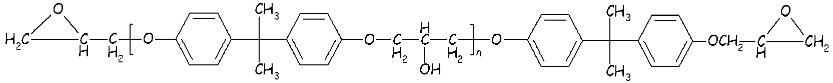 wherein n is from about 2 to about 30.

A preferred epoxy cresol novolac resin has the following structure: 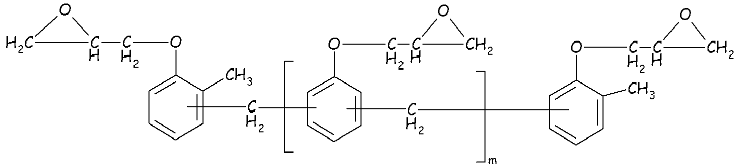 wherein m is from about 5 to about 25.

The epoxy resins used in the composition (C) may also include curing agents such as amine curing agents which permit their curing at high temperatures, pigments, colorants, and/or functional fillers, such as, for example, sulfates. Examples of amine curing agents which may be employed include, but are not limited to, polyamidoamines (such as polyamidoamines derived from dimerized linoleic acid and diethylenetriamine); amidoamines (such as amidoamines derived from stearic acid); aliphatic amine adducts; alkylene oxide/polyamine adducts; polyalkylene oxide amines; products of the amination of polypropylene glycol or polyethylene glycol; ketimines; dicyandiamide; and aromatic amines. Examples of sulfates which may be employed include, but are not limited to, barium sulfate and calcium sulfate. An example of an epoxy resin which may be employed in the composition (C) is a bisphenol A based epoxy resin product manufactured by Morton International Inc., known as Corvel® Green 10-6071.

The composition (C) also includes at least one oxide of cobalt, wherein the oxide of cobalt may be present in the form of cobaltic oxide (Co₂O₃), cobaltous oxide (CoO), cobalto-cobaltic oxide (Co₃O₄), or a mixture of any two or three forms above. Preferably, the oxide of cobalt in the composition (C) is present in the form of cobaltic oxide (Co₂O₃).

The oxide of cobalt is generally present in the composition (C) from 0.5% to 25% by weight, preferably from 1% to 10% by weight, and more preferably from 2.5% to 7.5% by weight, with respect to the total weight of the composition (C).

According to a particular advantageous embodiment of the present invention, the composition (C) further includes at least one oxide of zinc (ZnO), wherein ZnO is present in the composition (C) from 0.5 to 10% by weight, preferably from 0.5% to 5% by weight, and more preferably from 1 % to 3% by weight, based on the total weight of the composition (C).

Excellent working effects were obtained when the composition (C) comprised ZnO in an amount of 1-3 wt. % based on the total weight of the composition (C), which provided strong bonding to substrates of galvanized metal.

Another aspect of the present invention concerns a process for manufacturing the composition (C) as above described, the process comprising mixing:
- at least one ECTFE polymer;
- at least one epoxy resin;
- at least one oxide of cobalt; and, optionally,
- at least one oxide of zinc.

In one embodiment of the process invention detailed above, it comprises admixing of the at least one ECTFE polymer; at least one epoxy resin; at least one oxide of cobalt; and, optionally, at least one oxide of zinc, as desired in the composition (C), by solution mixing, melt mixing, dry blending, or a combination of dry blending and melt mixing.

Preferably, the components of the composition (C) are mixed by solution mixing. The solution mixing can be carried out following standard methods. Typically, liquid components can be added together with stirring and/or a solid component can be dissolved in a liquid component.

In a preferred variant of the process invention, said at least one epoxy resin in a suitable solvent is blended with pellets or powder of the ECTFE polymer, in a ribbon blender, v-cone blender or like apparatus and the solvent is removed by evaporation, vacuum, or other means. Thereafter, the oxide of cobalt, or a mixture of the oxide of cobalt with zinc oxide, also preferably in powder form, is blended into the mixture on the same equipment. If necessary, the final mixture may be milled to the desired size depending upon the desired method of application. Most preferably, the resulting composition is in the form of a powder.

According to a variant of the process invention, it comprises mixing and heating: at least one ECTFE polymer; at least one epoxy resin; an oxide of cobalt; and, optionally, an oxide of zinc. It is understood that the mixing can be carried out as described above.

Still another aspect of the present invention includes the use of the aforedescribed composition (C) to form a primer coating on a metal substrate. According to a preferred variant of the process invention, the metal substrate comprises a galvanized metal surface, for example but not limited to galvanized steel.

Still another aspect of the present invention concerns an article comprising a substrate coated by a primer coating layer formed by the composition (C) as afore described. The various substrates capable of being coated include, but are not limited to, metal surfaces such as surfaces of steel, aluminum, iron, zinc, cadmium, magnesium, brass, bronze, Monel®, Inconel®; fabrics that will withstand the heating temperatures required, such as fiberglass fabrics, asbestos fabrics, metal fabrics and the like, as well as glass and any plastic surface which will withstand high temperatures without degrading. Examples of such plastic surfaces include thermosetting resins, polyurethanes, silicones, fluoroelastomers, and the like.

Especially preferred examples of the substrate in said article are steel-based galvanized articles, such as galvanized steel strip or sheet having a pair of opposed surfaces.

Examples of articles of this invention include wire and cable; cookware, industrial tubing, pipes, pumps and tanks and dryer rollers as well as other articles which require coatings having high strength at elevated temperatures, resistance to chemical attack, good electrical insulating properties, non-sticking surfaces, abrasion and scratch resistance and firm adherence of the coating.

To make the article as above described, a substrate may be pretreated prior to coating with a primer coating formed by the composition (C), to obtain a roughened surface in order to achieve a stronger adherence of the primer coating to the substrate. Any suitable surface treatment can be employed for this purpose such as sand or grit blasting, etching, etc.

Generally, key surface preparation for a substrate having a galvanized steel surface includes chemical cleaning (to remove surface contaminants and zinc corrosion products) and/or profiling (to allow good mechanical bonding of the coating on the surface). Among different chemical cleaning approaches, ammonia cleaning, alkaline solution cleaning, and solvent cleaning are most commonly used for removing dirt and zinc corrosion from a galvanized surface. Among conventional profiling approaches, sweep-blasting, phosphating, and using vinyl butyral acid etch wash primers or acrylic passivations are the most common methods of providing a good coating adhesion profile for a galvanized surface.

Any of the well-known powder coating techniques may be employed to coat a substrate by the primer composition according to the present invention. These powder coating techniques include electrostatic deposition, fluidized bed, spraying, rotolining, and similar techniques. These coating techniques provide initial adherence of a powder composition to a substrate and the substrate is thereafter subjected to a heat treatment above the melting point of the powder to fuse or coalesce ("flow out") the particles of the powder into a continuous layer. In forming the coated substrate in an article of this invention, it is preferred to employ flow out temperatures in the range of about 100°C to 350°C, preferably about 120°C to 280°C. The duration of the heating step is dependent upon a number of factors, including the temperature employed, the coating thickness, the type of substrate, etc. In general, flow out times may be from about 1 minute to about 2 hours or more. Upon exposure to the elevated temperature, the epoxy resin crosslinks to provide firm adhesion to the substrate.

After a continuous primer coating is formed over the substrate, a layer of particles of the halopolymer coating may be likewise deposited on the primer coating and then heated to flow out such particles into a continuous coating which is fused to the surface of the primer layer. Preferably, the halopolymer used in the top coat is the same as that used in the primer, i.e. ECTFE copolymer.

Substrates which are coated in accordance with the present invention have coated surfaces which are continuous and essentially pinhole-free.

The coating of primer according to the present invention may be deposited upon the substrate in any desired thickness. In forming thick coatings (e.g., 0.02 mm or above) it may be desirable to employ a plurality of thin layers as is conventional in order to improve the uniformity and integrity of the coating.

Coated articles formed in accordance with the present invention preferably include the substrate, a layer of the primer of a thickness of from about 0.01 mm to about 0.15 mm, and an overlying layer of the halopolymer having a thickness of from about 0.05 mm to about 2.0 mm.

The invention will be now described in more detail with reference to the following examples, whose purpose is merely illustrative and not intended to limit the scope of the invention.

**EXAMPLES**

**Raw materials**

**ECTFE Polymer:**
- A 50/50 mole% ethylene/chlorotrifluoroethylene (E/CTFE) copolymer commercially available under trade name HALAR^{®} 6014 having a melting point (Tₘ₂) of about 225°C.
- A 50/50 mole% ethylene/chlorotrifluoroethylene (E/CTFE) copolymer commercially available under trade name HALAR^{®} 6514 having a melting point (Tₘ₂) of about 225°C. HALAR^{®} 6514 is a black, semi-crystalline melt processable fluorinated primer.
   **epoxy resin**
   Corvel® Green 10-6071 manufactured by Morton International, Inc. Mor-Temp® Flat Black HHA 99-7014 manufactured by AkzoNobel.

**Examples 1-3**

Three galvanized steel panels each having dimensions of 20 X 20 X 0.6 cm were immersed in a solution of 3% ammonia for 30 minutes, to remove most surface containments and zinc hydroxides attached on the galvanized surface. Subsequently, the steel panels were taken out of the ammonia solution and thoroughly washed by hot water with an abrasive sponge. Each of thus pretreated panels (Panel Nos. 1-3) was preheated for 20 minutes in an oven set at 290°C, and then coated with a primer composition of the present invention in powdered form (Composition Nos. 1-3 in Table 1), using an electrostatic powder spray gun with an output setting of 80kV and 5mA.

After Panels 1-3 were coated with the primer, each of them was then re-heated for 10 minutes in an oven set at 265°C, and subsequently coated with a Halar® 6014 topcoat, using an electrostatic powder spray gun with output setting of 40kV and 20mA, to form a final coating having a total thickness of about 200 microns. On these coated panels, a rectangular area with dimension 10mm x 70mm is cut into the coating from the panel edge, penetrating through to the substrate, and about 1cm length from the edge side of the rectangular cut was detached from the substrate by a specific cutting tool. The thus formed lip of the rectangular strip is then clamped in a dynamometer and the force to detach the strip from the substrate is recorded thereby, as a measurement of coating adhesion to the substrate.

Additionally, three extra panels were prepared and coated with primer using the same applicative conditions for Panel Nos. 1-3, only without top coat application, to conveniently measure primer thickness on the Panel Nos. 1-3.

### Example 4

This Example was carried out on a galvanized steel panel having measuring of 20 X 20 X 0.6 cm (Panel No. 4), according to the same procedure in Examples 1-3, except that a different primer composition was used (Composition No. 4 in Table 1) as follows:
Halar® 6014 -- 28.5wt%
Mor-Temp® Flat Black HHA 99-7014 -- 70.0 wt%
Co₂O₃ -- 1.5 wt%

### Comparative Example 5

This comparative Example was carried out on a galvanized steel panel having measuring of 20 X 20 X 0.6 cm (Panel No. 5), according to the same procedure in Examples 1-4, except that a HALAR^{®} 6514 primer is used in place of the primer composition Nos. 1-4 in Table 1.

**Table 1**

| | Ex. 1 | Ex. 2 | Ex. 3 | Ex. 4 | Com. Ex.5 |
|---|---|---|---|---|---|
| ***Primer Composition (wt%)*** | | | | | |
| ECTFE | 28.5 | 28.2 | 27.0 | 28.5 | 100 |
| Epoxy | 70 | 70 | 70 | 70 | 0 |
| Cobalt Oxide | 1.5 | 1.5 | 3.0 | 1.5 | 0 |
| Zinc Oxide | 0 | 0.3 | 0 | 0 | 0 |

| ***Primer Coating Properties*** | | | | | |
|---|---|---|---|---|---|
| Thickness (µm)* | 195 (23.2) | 267 (20.8) | 241 (25.5) | 229 (17.4) | 204 (16.9) |
| Peeling strength | ~0 | 3kg | 3kg | 5kg | ~0 |

| | | | | | |
|---|---|---|---|---|---|
| ** Primer thickness in the table is expressed in the form of "A verage (S. D.)"* | | | | | |

As can be seen from Table 1, the primer compositions of the present invention provide good adhesion on the attached galvanized steel surface, as expressed by the superior peel strength to the Comparative Example 5.

It is to be understood, however, that variations and modifications of the present invention may be made without departing from the scope of the invention. It is also to be understood that the scope of the invention is not to be interpreted as limited to the specific embodiment disclosed herein, but only in accordance with the appended claims when read in light of the foregoing disclosure.

## Claims

1. A composition [composition (C)] comprising:
- at least one ethylene/chlorotrifluoroethylene (ECTFE) polymer comprising recurring units derived from ethylene (E) and from chlorotrifluoroethylene (CTFE);
- at least one epoxy resin;
- at least one oxide of cobalt, and, optionally,
- at least one oxide of zinc,
wherein the composition (C) comprises more than 60% by weight of the at least one epoxy resin, with respect to the total weight of the composition (C).

2. The composition (C) according to claim 1, wherein the composition (C) comprises from 65% to 85% by weight of the at least one epoxy resin, with respect to the total weight of the composition (C).

3. The composition (C) according to claim 1 or 2, wherein the at least one epoxy resin is selected from a group consisting of bisphenol A based epoxy resins and epoxy cresol novolac resins.

4. The composition (C) according to claim 3, wherein the at least one epoxy resin comprises a bisphenol A based epoxy resin having the following structure: 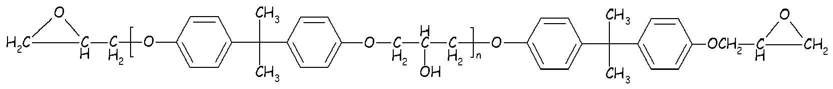 wherein n is from about 2 to about 30.

5. The composition (C) according to claim 3, wherein the at least one epoxy resin comprises an epoxy cresol novolac resin having the following structure: 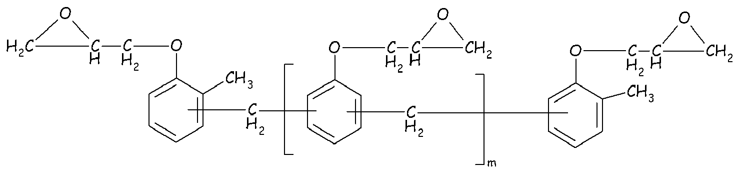 wherein m is from about 5 to about 25.

6. The composition (C) according to any of the preceding claims, wherein the composition comprises from 15% to 40% by weight of the at least one ECTFE polymer, with respect to the total weight of the composition (C).

7. The composition (C) according to any of the preceding claims, wherein the oxide of cobalt is present in the composition (C) from 0.5% to 25% by weight, with respect to the total weight of the composition (C).

8. The composition (C) according to any of the preceding claims, wherein the oxide of zinc is present in the composition (C) from 0.5% to 10% by weight, based on the total weight of the composition (C).

9. The composition (C) according to any of the preceding claims, wherein the ECTFE polymer comprises:
(a) from 30 to 70 % by moles of E; and
(b) from 70 to 30 % by moles of CTFE.

10. The composition (C) according to any of the preceding claims, comprising the ECTFE polymer as the sole polymer component.

11. A process for manufacturing the composition (C) according to any of the preceding claims, which comprises mixing:
- at least one ECTFE polymer;
- at least one epoxy resin;
- an oxide of cobalt; and, optionally,
- an oxide of zinc.

12. A process for manufacturing the composition (C) according to any one of claims 1-10, which comprises mixing and heating: at least one ECTFE polymer; at least one epoxy resin; an oxide of cobalt; and, optionally, an oxide of zinc.

13. Use of the composition (C) according to any one of claims 1-8 to form a primer coating on a metal substrate.

14. Use according to claim 11, wherein the metal substrate comprises a galvanized surface.

15. An article comprising a substrate coated by a primer coating layer formed by the composition (C) according to any one of claims 1-10.
